# EUROPEAN PATENT APPLICATION

(11) **EP 3 892 134 A1**
(43) Date of publication of application: **13.10.2021**
(21) Application number: 18944613.1
(22) Date of filing: 28.12.2018
(51) Int. Cl.: A24F 47/00, G06Q 30/02

(54) **INFORMATION PROCESSING DEVICE, INFORMATION PROCESSING METHOD, AND PROGRAM**

(71) Applicant: Japan Tobacco Inc., Tokyo 105-6927 (JP)
(72) Inventor: HASHIMOTO, Kentaro, Tokyo 105-6927 (JP)
(74) Representative: Hoffmann Eitle
(86) International application number: PCT/JP2018/048450
(87) International publication number: WO 2020/136866

(57) **Abstract**

A usage information acquisition unit obtains usage information about an aerosol generation device that is capable of attaching a replaceable member that is expended through use. A purchase estimation unit estimates purchase timing for said member which is purchased as a plurality of units, estimating same on the basis of the obtained usage information. An output unit outputs information pertaining to the purchase timing.

## Description

### [Technical Field]

The present invention relates to an information processing apparatus, an information processing method, and a program, which are related to an aerosol generation device.

### [Background Art]

Patent Document 1 discloses a technique of acquiring the amount of remaining tar from an electronic tobacco and notifying an accessory information of the electronic tobacco to a user terminal in a case where the amount of remaining tar is less than a threshold value.

### [Citation List]

### [Patent Document]

[Patent Document 1]
United States Patent Application, Publication No. 2016/0189216

### [Summary of Invention]

### [Technical Problem]

However, in an aerosol generation device such as an electronic tobacco or a heat-not-burn tobacco, there are many cases where a replaceable member (refill), such as a cartridge of an aerosol source, a tobacco capsule (flavor capsule), a tobacco stick, or a tank including a liquid, is sold as a package containing a plurality of members. Therefore, even when the remaining amount of one member is low, only some of the members contained in the package are used, and there is a possibility that the member possessed by the user remains. Therefore, as in the technique disclosed in Patent Document 1, it may not be appropriate to encourage purchase of the member when the remaining amount of one member is low.

An object of the present invention is to provide an information processing apparatus, an information processing method, and a program which configured to specify an appropriate purchase timing in a replaceable member (refill) of the aerosol generation device.

### [Solution to Problem]

According to a first aspect of the present invention, there is provided an information processing apparatus including a usage information acquisition unit that acquires usage information of an aerosol generation device to which a replaceable member consumed with use is attachable, a purchase estimation unit that estimates a purchase timing of the member purchased in plurality based on the acquired usage information, and an output unit that outputs information related to the purchase timing.

According to a second aspect of the present invention, the information processing apparatus according to the first aspect may further include a purchase history acquisition unit that acquires a purchase history of the member, in which the purchase estimation unit may estimate the purchase timing of the member based on the usage information and the purchase history.

According to a third aspect of the present invention, the information processing apparatus according to the first or second aspect may further include a usage amount specifying unit that specifies a usage amount of the member based on the usage information, and a replacement estimation unit that estimates a replacement timing of the member based on the usage amount, in which the purchase estimation unit may estimate the purchase timing of the member based on the usage information and a history of the replacement timing, and the output unit may output information related to the purchase timing and information related to the replacement timing.

According to a fourth aspect of the present invention, the information processing apparatus according to the third aspect may further include a replacement determination unit that determines whether or not the member is replaced based on the usage information, in which the replacement estimation unit may estimate the replacement timing based on the usage amount at a timing when it is determined the member has been replaced.

According to a fifth aspect of the present invention, the information processing apparatus according to the third aspect may further include an opportunity usage amount specifying unit that estimates the usage amount for each suction opportunity based on the usage history, in which the purchase estimation unit may estimate the purchase timing based on the specified usage amount and the usage amount for each suction opportunity.

According to a sixth aspect of the present invention, the information processing apparatus according to any one of the third to fifth aspects may further include a frequency estimation unit that estimates a usage frequency of the aerosol generation device based on the replacement timing, in which the output unit may output the information related to the usage frequency.

According to a seventh aspect of the present invention, in the information processing apparatus according to any one of the first to sixth aspects, the usage information acquisition unit may acquire the usage information from a communication device associated with the aerosol generation device, and the output unit may transmit information related to the purchase timing to the communication device.

According to an eighth aspect of the present invention, there is provided an information processing method including a step of acquiring usage information of an aerosol generation device to which a replaceable member consumed with use is attachable, a step of estimating a purchase timing of the member purchased in plurality based on the acquired usage information, and a step of outputting information related to the purchase timing.

According to a ninth aspect of the present invention, there is provided a program causing a computer to execute: a step of acquiring usage information of an aerosol generation device to which a replaceable member consumed with use is attachable, a step of estimating a purchase timing of the member purchased in plurality based on the acquired usage information, and a step of outputting information related to the purchase timing.

### [Advantageous Effects of Invention]

According to at least one of the above aspects, the information processing apparatus is capable of specifying an appropriate purchase timing for a replaceable member (refill) of an aerosol generation device.

### [Brief Description of Drawings]

Fig. 1 is a schematic diagram showing a configuration of an information providing system that provides information related to an aerosol generation device according to a first embodiment.
Fig. 2 is a schematic block diagram showing a configuration of the aerosol generation device according to the first embodiment.
Fig. 3 is a flowchart showing an operation of the aerosol generation device according to the first embodiment.
Fig. 4 is a schematic block diagram showing a configuration of an information providing server according to the first embodiment.
Fig. 5 is an example of a usage history database according to the first embodiment.
Fig. 6 is an example of a purchase history database according to the first embodiment.
Fig. 7 is a sequence diagram showing an operation of the information providing system according to the first embodiment.
Fig. 8 is a flowchart showing an operation of an aerosol generation device according to a second embodiment.
Fig. 9 is a schematic block diagram showing a configuration of an information providing server according to the second embodiment.
Fig. 10 is an example of a usage history database according to the second embodiment.
Fig. 11 is a sequence diagram showing an operation of an information providing system according to the second embodiment.
Fig. 12 is a sequence diagram showing an operation of an information providing system according to a third embodiment.
Fig. 13 is a schematic block diagram showing a configuration of a computer according to at least one embodiment.

### [Description of Embodiments]

### <First Embodiment>

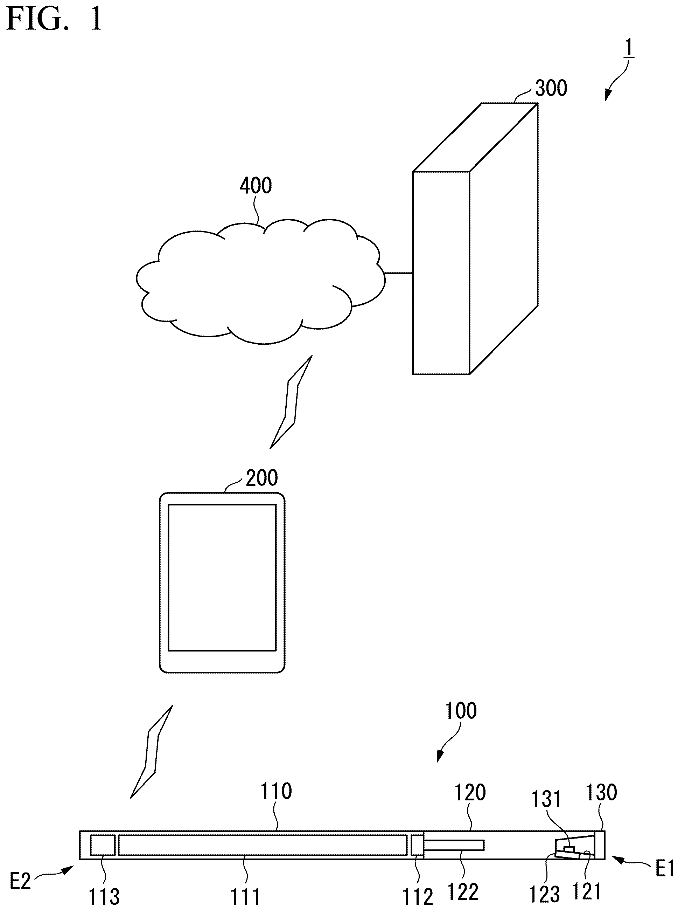

Fig. 1 is a schematic diagram showing a configuration of an information providing system that provides information related to an aerosol generation device according to a first embodiment.

The information providing system 1 includes an aerosol generation device 100, a communication device 200, and an information providing server 300. The aerosol generation device 100 generates, for example, an aerosol to be sucked by a user without combustion. The suction performed by the user is an aspect of usage of the aerosol generation device 100.

The aerosol generated by the aerosol generation device 100 may have a flavor. The aerosol generation device 100 is, for example, a heat-not-burn tobacco (T-vapor and Infused), an electronic tobacco (E-vapor), and the like. Further, the aerosol generation device 100 includes a type that directly heats a tobacco, a type that does not directly heat the tobacco, and a type that heats a liquid. Further, the aerosol generation device 100 may atomize the liquid by generating a Surface Acoustic Wave (SAW) using a piezoelectric element substrate having a comb-shaped electrode pair. As described above, the aerosol generation device 100 includes various devices such as a combustion type device, a non-combustion type device, a heating type device, and a non-heating type device. The devices are merely examples, and any device may be used as the aerosol generation device 100 in a case of a device that generates an aerosol.

The communication device 200 includes a communication function and is capable of being held by the user of the aerosol generation device 100. The communication device 200 is, for example, a smartphone, a mobile phone, a computer (for example, a desktop, a laptop, a tablet terminal, or the like), a Personal Digital Assistant (PDA), a wearable terminal (a clock-type device, a glasses-type device, or the like), and a Head Mounted Display (HMD). The communication device 200 is not limited to these examples.

The information providing server 300 acquires usage information of the aerosol generation device 100 from the communication device 200, and provides information related to the aerosol generation device 100 to the communication device 200 based on the acquired information. The information providing server 300 is, for example, a server device, a computer (for example, a desktop, a laptop, a tablet terminal, or the like), a PDA, a smartphone, a mobile phone, or other types of computers. The information providing server 300 is not limited to these examples.

Further, in Fig. 1, the aerosol generation device 100 and the communication device 200 are connected to each other by using a predetermined communication standard (communication protocols) such as short-range wireless communications or various wired communications. The predetermined communication standard may be, for example, Bluetooth (registered trademark), Wi-Fi (registered trademark), a wireless LAN (WLAN), a wireless WAN (WWAN), and the like. Further, the predetermined communication standard may be, for example, Integrated Service Digital Networks (ISDNs), Long Term Evolution (LTE), Code Division Multiple Access (CDMA), Low Power Wide Area (LPWA), or the like. Further, the predetermined communication standard is not limited to these examples, and any communication standard may be used. For example, wired communications, such as Universal Serial Bus (USB), Mini USB, Micro USB, and Lightning, may be used. Further, the predetermined communication standard may be a communication standard related to satellite communication.

Further, in Fig. 1, the communication device 200 and the information providing server 300 are capable of being connected to each other via a network 400. The network 400 may be, for example, a wired network or a wireless network. The network 400 may be, for example, Wi-Fi, an ad hoc network, an intranet, an extranet, a Virtual Private Network (VPN), a Local Area Network (LAN), a wireless LAN (WLAN), a Wide Area Network (WAN), a wireless WAN (WWAN), a Metropolitan Area Network (MAN), a part of the Internet, a Public Switched Telephone Network (PSTN), ISDNs, LTE, CDMA, Bluetooth, or Low Power Wide Area Network (LPWAN). Further, the network 400 may be the satellite communication. Further, the network 400 may include a combination thereof. The network 400 is not limited to these examples.

### «Aerosol Generation Device»

The aerosol generation device 100 in the first embodiment may be formed, for example, in a rod shape. For example, when the user performs a suction operation from one end of the aerosol generation device 100, the aerosol generation device 100 generates an aerosol with a flavor and supplies the aerosol to the user. Further, when the user presses a switch included in the aerosol generation device 100, the aerosol generation device 100 may generate the aerosol with the flavor. The aerosol generator 100 may generate an aerosol with a flavor in any manner. Hereinafter, one end of the side where the suction operation is performed in the aerosol generation device 100 is referred to as a suction end E1, and the other end is referred to as a non-suction end E2. The aerosol generation device may be referred to as an aerosol creation device.

As shown in Fig. 1, the aerosol generation device 100 includes a power supply unit 110, an atomization unit 120, and a replaceable member (refill) 130. The aerosol generation device 100 shown in Fig. 1 is merely an example, and is not limited to the configuration. The power supply unit 110 may be referred to as an aerosol generation control device, and the atomization unit 120 may be referred to as an aerosol generation material. The replaceable member 130 is, for example, a cartridge of an aerosol source, a tobacco capsule (for example, a flavor capsule), a tobacco stick, or the like. Further, the replaceable member (refill) 130 may be a whole atomization unit 120. Further, in a case where the aerosol generation device 100 is a device using a liquid, such as a device that generates E-vapor or SAW, the replaceable member (refill) 130 may be, for example, a tank, a container, or the like including a liquid.

The aerosol generation device 100 may be separable into the power supply unit 110 (an aerosol generation control device) and the atomization unit 120 (an aerosol generation material). In a case where the aerosol generation device 100 is used, the power supply unit 110 (an aerosol generation control device) and the atomization unit 120 (an aerosol generation material) are connected (for example, screwed or coupled) to each other. Further, in the aerosol generation device 100, the power supply unit 110 (aerosol generation control device) and the atomization unit 120 (aerosol generation material) may be housed in the same housing.

Further, in a case where the aerosol generation device 100 atomizes a liquid by generating SAW using the piezoelectric element substrate having the comb-shaped electrode pair, the aerosol generation device 100 includes, for example, the piezoelectric element substrate having the comb-shaped electrode pair and a liquid supply unit configured to supply a liquid aerosol source to the piezoelectric element substrate as the atomization unit 120. The piezoelectric element substrate may be configured to atomize the aerosol source by surface acoustic waves generated by applying a high frequency voltage to the comb-shaped electrode pair. Further, the piezoelectric element substrate has comb-shaped electrode pairs whose number is determined based on a desired aerosol atomized by the surface acoustic waves. The number of comb-shaped electrode pairs is determined based on the desired aerosol. Therefore, in the atomization unit in which the electric power supplied to the comb-shaped electrode pair is limited, it is possible to provide an appropriate atomization unit because atomization efficiency of the aerosol source is improved.

One end of the power supply unit 110 forms the non-suction end E2 of the aerosol generation device 100, and one end of the atomization unit 120 forms the suction end E1 of the aerosol generation device 100. The end on a side of the suction end E1 of the power supply unit 110 is configured to be attachable to or detachable from the end on a side of the non-suction end E2 of the atomization unit 120. For example, the end on the side of the suction end E1 of the power supply unit 110 and the end on the side of the non-suction end E2 of the atomization unit 120 are threaded so as to be screwed to each other. The suction end E1 of the atomization unit 120 is provided with an insertion hole 121 for inserting the replaceable member (refill) 130. The power supply unit 110 and the atomization unit 120 may be connected to each other in any shape as long as they are attachable to or detachable from each other.

The atomization unit 120 may be filled with the liquid of an aerosol source and include a heat source 122 which heats the aerosol source. The heat source 122 is, for example, a heater, an Induction Heating (IH), or the like. The atomization unit 120 may include a device that generates a high frequency instead of the heat source 122 to generate the aerosol by the high frequency. The high frequency includes ultrasonic waves. Further, the atomization unit 120 may include a function of generating the aerosol by a chemical change. The replaceable member (refill) 130 is filled with a flavor source. The flavor source includes, for example, tobacco leaves, and the flavor source is not limited to the example. The flavor source may be made using the tobacco leaves or the tobacco leaves into which a predetermined flavor is added. The tobacco leaves may not be used for the flavor source. The power supply unit 110 supplies electric power to the heat source 122 of the atomization unit 120, heats the aerosol source, and thereby generates the aerosol. The aerosol is discharged from the suction end E1 through the replaceable member (refill) 130 with the suction operation. In a case where the aerosol passes through the replaceable member (refill) 130, the flavor is imparted to the aerosol.

The flavor source of the replaceable member (refill) 130 of the atomization unit 120 is consumed with suction. Therefore, the replaceable member (refill) 130 is replaced (exchanged) after being used (for example, suction (puff)) a predetermined number of times (for example, 50 times). The aerosol source of the atomization unit 120 is also replaced (exchanged) after being used (for example, suction (puff)) a predetermined number of times. The atomization unit 120 and the replaceable member (refill) 130 are examples of the replaceable member (refill).

The replaceable member (refill) 130 is sold as a plurality of pieces in a package (a set of the members). The number of pieces is, for example, five, and the replaceable member (refill) 130 is sold as a package containing five pieces. Therefore, the replaceable member (refills) 130 is purchased in plurality. For example, the replaceable member (refill) 130 is purchased as a package containing five members. The number of pieces in a package may be any number, and 5 is merely an example. Further, a plurality of types of replaceable members (refills) 130 may be included in one package, and, in that case, a different number of replaceable members (refill) 130 may be included in one package for each type of the replaceable member (refill) 130. For example, ten flavor capsules and two cartridges may be included in one package. The flavor capsule and the cartridge are the different types of replaceable members (refills) each other. Further, in a case where the plurality of types of replaceable members (refills) 130 are included in one package, a plurality of replaceable members (refills) 130 corresponding to at least one type in the plurality of types of replaceable members (refills) may be included. For example, in a case where a plurality of (for example, 5) flavor capsules are included in one package, the number of cartridges may be one.

Further, in the replaceable member (refill) 130, an identifier 131 for uniquely identifying the replaceable member (refill) 130 may be attached to a surface of a portion to be inserted into the atomization unit 120. The identifier 131 may be, for example, a combination of the type of the replaceable member (refill) 130 and a serial number of a package of the replaceable members (refill). A reader 123 for reading the identifier 131 of the replaceable member (refill) 130 may be provided on an inner surface of the insertion hole 121 of the atomization unit 120. The identifier 131 is realized by, for example, a barcode, a two-dimensional code, an RFID tag, or the like. The reader 123 is realized by, for example, a camera, a barcode reader, an RFID reader, or the like. The reader 123 is capable of reading the identifier 131 attached to the replaceable member (refill) 130. In a case where the replaceable member (refill) 130 is the flavor capsule, the identifier 131 may be expressed as a capsule ID. Further, the reader 123 is not necessarily the camera, the barcode reader, or the RFID reader, and may be a sensor or the like that detects attachment or detachment of the replaceable member (refill) 130.

The power supply unit 110 includes, for example, a battery 111, a sensor 112, and a control circuit 113.

The battery 111 is, for example, a lithium ion battery, but the present invention is not limited thereto. The battery 111 supplies electric power necessary for an operation of the aerosol generation device 100. For example, the battery 111 supplies the electric power to the sensor 112, the control circuit 113, and the like. The battery 111 will be described later.

The sensor 112 detects negative pressure (pressure) which occurs according to the suction operation of the user. The sensor 112 includes, for example, a piezoelectric element. The sensor 112 will be described later.

The control circuit 113 controls the operation of the aerosol generation device 100. Specifically, the control circuit 113 controls the electric power supplied to the atomization unit 120. Further, the control circuit 113 generates usage information of the aerosol generation device 100 and transmits the usage information to the communication device 200. The control circuit 113 communicates with the communication device 200 using the predetermined communication standard (for example, short-range wireless communication such as Bluetooth).

The control circuit 113 stores, for example, the number of suctions (the number of puffs) of one replaceable member (refill) 130, which is currently attached, in a volatile memory or a non-volatile memory (not shown in Fig. 1). The number of suctions (the number of puffs) is, for example, the cumulative number of suctions (number of puffs) after the replaceable member (refill) 130 is replaced (attached). In this case, when the replaceable member (refill) 130 is replaced, the control circuit 113 resets the number of suctions stored in the volatile or non-volatile memory.

The control circuit 113 calculates the number of suctions each time the sensor 112 detects the negative pressure (pressure) occurs due to the suction operation of the user. For example, the control circuit 113 adds "1" to the number of suctions stored in the volatile or non-volatile memory whenever the sensor 112 detects the negative pressure (pressure) occurs due to the suction operation of the user. Specifically, the control circuit 113 updates the cumulative number of suctions (for example, "30") up to the previous suction operation stored in the volatile or non-volatile memory with the number acquired by adding "1" (that is, "31"), according to the detection of the negative pressure (pressure) occurred due to the suction operation. As a result, the volatile or non-volatile memory stores the cumulative number up to a current suction operation.

Further, the control circuit 113 may store the number of suctions (number of puffs) for each of the plurality of replaceable members (refills) 130 in the volatile memory or the non-volatile memory. In this case, the control circuit 113 adds "1" to the number of suctions of the replaceable member (refill) 130 sucked in the current suction operation. The control circuit 113 identifies which replaceable member (refill) 130 is sucked by using the identifier 131 of the replaceable member (refill) 130.

For example, a case is assumed where the volatile memory or the non-volatile memory stores the number of suctions of a replaceable member (refill) 130A as "30" and the number of suctions of a replaceable member (refill) 130B as "20". In this case, when the control circuit 113 detects a suction operation of the replaceable member (refill) 130A, the number of suctions of the replaceable member (refill) 130A stored in the volatile memory or the non-volatile memory is updated to "31" and the number of suctions of the replaceable member (refill) 130B remains as "20".

The control circuit 113 may store the identifier 131 of the replaceable member (refill) 130 related to the previous suction in the volatile memory or the non-volatile memory. Further, the control circuit 113 may store the identifier 131 of the replaceable member (refill) 130 related to the previous suction and the number of suction (the number of puffs) of the replaceable member (refill) 130 in association with each other in the volatile memory or the non-volatile memory. The information stored in the volatile or non-volatile memory by the control circuit 113 is not limited to the examples, and may be any information.

Some of components included in the power supply unit 110 may be included in the atomization unit 120. Some of components included in the atomization unit 120 may be included in the power supply unit 110. Alternatively, all the components included in the power supply unit 110 and the atomization unit 120 may be included in the same housing instead of the power supply unit 110 and the atomization unit 120.

### «Configuration of Aerosol Generation Device»

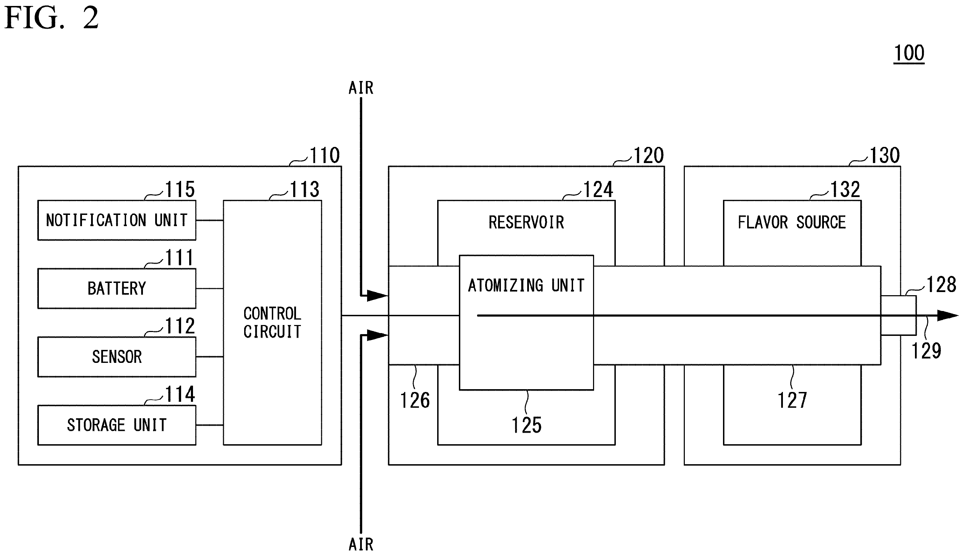

Fig. 2 is a schematic block diagram showing a configuration of the aerosol generation device 100 according to the first embodiment.

As shown in Fig. 2, the aerosol generation device 100 includes a power supply unit 110 and an atomization unit 120. As shown in the drawing, for example, the power supply unit 110 may include a battery 111, a sensor 112, a control circuit 113, a storage unit 114, and a notification unit 115. Further, the atomization unit 120 may include, for example, a reservoir 124, an air intake flow path 126, an aerosol flow path 127, a mouthpiece 128, and an atomizing unit 125 including a heat source 122.

Further, as shown in Fig. 2, the aerosol generation device 100 includes a replaceable member (refill) 130. As an example, the replaceable member (refill) 130 may include a flavor source 132. The flavor source 132 may include, for example, a flavor component included in the tobacco. The replaceable member (refill) 130 may be configured to be attachable to or detachable from the atomization unit 120. Further, all the components included in the atomization unit 120 and the replaceable member (refill) 130 may be included in the same housing instead of the atomization unit 120 and the replaceable member (refill) 130.

The reservoir 124 includes the aerosol source. For example, the reservoir 124 is configured with a fibrous or porous material, and includes the liquid aerosol source in a gap between the fibers or in a pore of the porous material. For example, cotton, glass fiber, a tobacco ingredient, or the like can be used for the fibrous or porous material described above. The reservoir 124 may be configured as a tank containing the liquid. The aerosol source is, for example, the liquid such as water or polyhydric alcohol such as glycerin or propylene glycol. In a case where the aerosol generation device 100 is a medical inhaler such as a nebulizer, the aerosol source may also include a drug for the patient to inhale. As another example, the aerosol source may include a tobacco ingredient or extract derived from the tobacco ingredient that releases the flavor component through heating. In this case, an aerosol including the flavor component is generated even in a case where the replaceable member (refill) 130 is not attached. The reservoir 124 may have a configuration capable of replenishing the consumed aerosol source. Alternatively, the reservoir 124 may be configured so that the reservoir 124 is replaced when the aerosol source is consumed. The reservoir 124 may be the replaceable member (refill). Further, the aerosol source is not limited to the liquid, and may be a solid. In a case where the aerosol source is the solid, the reservoir 124 may be, for example, a hollow container that does not use the fibrous or porous material.

The atomizing unit 125 is configured to atomize the aerosol source to generate the aerosol. When the suction operation is detected by the sensor 112, the atomizing unit 125 generates the aerosol. For example, a wick (not shown) may be provided to connect the reservoir 124 and the atomizing unit 125. In this case, a part of the wick passes through an inside of the reservoir 124 and is in contact with the aerosol source. The other part of the wick extends to the atomizing unit 125. The aerosol source is carried from the reservoir 124 to the atomizing unit 125 by capillary effect of the wick. As an example, the atomizing unit 125 includes a heat source 122 (not shown in Fig. 2) electrically connected to the battery 111. The heat source 122 is arranged to be in contact with or in near to the wick. When the suction operation is detected, the control circuit 113 controls the heat source 122 of the atomizing unit 125 and atomizes the aerosol source by heating the aerosol source carried through the wick. For another example, the atomizing unit 125 may be a high frequency atomizer that atomizes the aerosol source through high frequency vibration. The high frequency includes ultrasonic waves. The air intake flow path 126 is connected to the atomizing unit 125, and the air intake flow path 126 leads to an outside of the aerosol generation device 100. The aerosol generated in the atomizing unit 125 is mixed with the air taken in through the air intake flow path 126. A mixed fluid of the aerosol and the air is sent to the aerosol flow path 127, as indicated by an arrow 129. The aerosol flow path 127 has a tubular structure for transporting the mixed fluid of the aerosol and the air, which are generated in the atomizing unit 125, to the mouthpiece 128.

The flavor source 132 is a component for imparting a flavor to the aerosol. The flavor source 132 is arranged in the middle of the aerosol flow path 127. The mixed fluid of the air and the aerosol which are generated by the atomizing unit 125 (hereinafter, there is a case where the mixed fluid is simply referred to as aerosol) flows through the aerosol flow path 127 to the mouthpiece 128. As described above, the flavor source 132 is provided downstream of the atomizing unit 125 with respect to a flow of the aerosol. In other words, in the aerosol flow path 127, the flavor source 132 is located closer to the mouthpiece 128 than the atomizing unit 125. Therefore, the aerosol generated by the atomizing unit 125 passes through the flavor source 132 and reaches the mouthpiece 128. When the aerosol passes through the flavor source 132, the flavor component included in the flavor source 132 is imparted to the aerosol. As an example, in a case where the aerosol generation device 100 is the electronic tobacco, the flavor source 132 may be derived from the tobacco, such as a chopped tobacco or a processed product obtained by molding a tobacco ingredient into granules, sheets, or powder. The flavor source 132 may also be a non-tobacco derived from plants (for example, mint, herbs, and the like) other than the tobacco. As an example, the flavor source 132 includes a nicotine component. The flavor source 132 may contain a perfume component such as menthol. Further, the flavor source 132 may be a mixture thereof. Further, in addition to the flavor source 132, the reservoir 124 may also have a substance including a flavor component. For example, the aerosol generation device 100 may be configured to include a tobacco-derived flavoring substance in the flavor source 132 and to include a non-tobacco-derived flavoring substance in the reservoir 124.

The mouthpiece 128 is located at an end of the aerosol flow path 127, and is configured to open the aerosol flow path 127 to the outside of the aerosol generation device 100. As shown in the drawing, the aerosol flow path 127 extends over the atomization unit 120 and the replaceable member (refill) 130. The mouthpiece 128 is provided in the replaceable member (refill) 130. The mouthpiece 128 corresponds to the suction end E1.

The user can take the air including the aerosol, which the flavor is imparted to, in the oral cavity by holding in his mouth and sucking the mouthpiece 128.

The battery 111 is a power source that stores electric power and supplies the electric power to each of the components of the aerosol generation device 100 such as the sensor 112, the storage unit 114, the notification unit 115, and the atomizing unit 125. The battery 111 may be charged by connecting to an external power source via a port (not shown in the drawing) of the aerosol generation device 100. Only the battery 111 may be removed from the power supply unit 110 or the aerosol generation device 100 and may be replaced with a new battery 111. Further, the battery 111 may be replaced with the new battery 111 by replacing the entire power supply unit 110 with a new power supply unit 110.

The sensor 112 may include a pressure sensor that detects pressure fluctuations in the air intake flow path 126 and/or the aerosol flow path 127, or a flow rate sensor that detects a flow rate in them. The sensor 112 may also include a weight sensor that detects a weight of a component such as the reservoir 124. The sensor 112 may also be configured to count the number of puffs performed by the user using the aerosol generation device 100. The sensor 112 may also be configured to integrate energization time on the atomizing unit 125. The sensor 112 may also be configured to detect a height of a liquid surface in the reservoir 124. The sensor 112 may also be configured to detect the attachment or detachment of the atomization unit 120 to or from the power supply unit 110 or to detect the attachment and detachment of the replaceable member (refill) 130 to or from the atomization unit 120. In this case, the sensor 112 has a function corresponding to the reader 123 in Fig. 1. Further, the sensor 112 may be configured to detect a State of Charge (SOC), a current integration value, a voltage, and the like of the battery 111. The current integration value may be obtained by a current integration method, an SOC-Open Circuit Voltage (OCV) method, or the like. The sensor 112 may also be a user-operable operation button or the like.

The control circuit 113 may be an electronic circuit module configured as a microprocessor or a microcomputer. The control circuit 113 may be configured to control the operation of the aerosol generation device 100 according to a computer executable instruction stored in the storage unit 114. The storage unit 114 is a storage medium such as a ROM, a RAM, or a flash memory. The storage unit 114 may be the non-volatile memory or the volatile memory. In addition to the above-described computer executable instruction, the storage unit 114 may store setting data which is necessary for controlling the aerosol generation device 100 or the like. For example, the storage unit 114 may store various data such as a control method of the notification unit 115 (such as light emission, vocalization, vibration, or the like), a value detected by the sensor 112, and a heating history of the atomizing unit 125. The control circuit 113 reads the data from the storage unit 114 as needed, uses the data for controlling the aerosol generation device 100, and stores the data in the storage unit 114 as needed.

The control circuit 113 may have a communication function, and communicates with the communication device 200 by using the predetermined communication standard (communication protocol). The aerosol generation device 100 may include a communication I/F (interface). The communication I/F (not shown in Fig. 2) transmits and receives the various data using the predetermined communication standard. The control circuit 113 transmits and receives the various data via the communication I/F.

The notification unit 115 may include a light emitting element such as an LED, a display, a speaker, a vibrator, or the like. The notification unit 115 is configured to provide some notifications to the user through light emission, display, vocalization, vibration, or the like, as needed.

In the configuration described above, the power supply unit 110 may be referred to as an aerosol generation control device, and the atomization unit 120 (more accurately, the aerosol source included in the reservoir 124) may be referred to as an aerosol generation material. Further, the atomizing unit 125 may be referred to as an aerosol generation unit that causes an aerosol to be generated by the aerosol generation material. The power supply unit 110 (an aerosol generation control device) and the atomization unit 120 (an aerosol generation material) may be sold and distributed separately. The communication function may be provided in at least one (including a case of being provided in both) of the power supply unit 110 (an aerosol generation control device) and the atomization unit 120 (an aerosol generation material), and various data may be transmitted in a case where the power supply unit 110 (an aerosol generation control device) and the atomization unit 120 (an aerosol generation material) are separated from each other. Further, the communication function may be provided in one of the power supply unit 110 (an aerosol generation control device) or the atomization unit 120 (an aerosol generation material), and various data may be transmitted in a case where the power supply unit 110 (an aerosol generation control device) and the atomization unit 120 (an aerosol generation material) are connected (screwed) to each other.

### «Operation of Aerosol Generation Device 100»

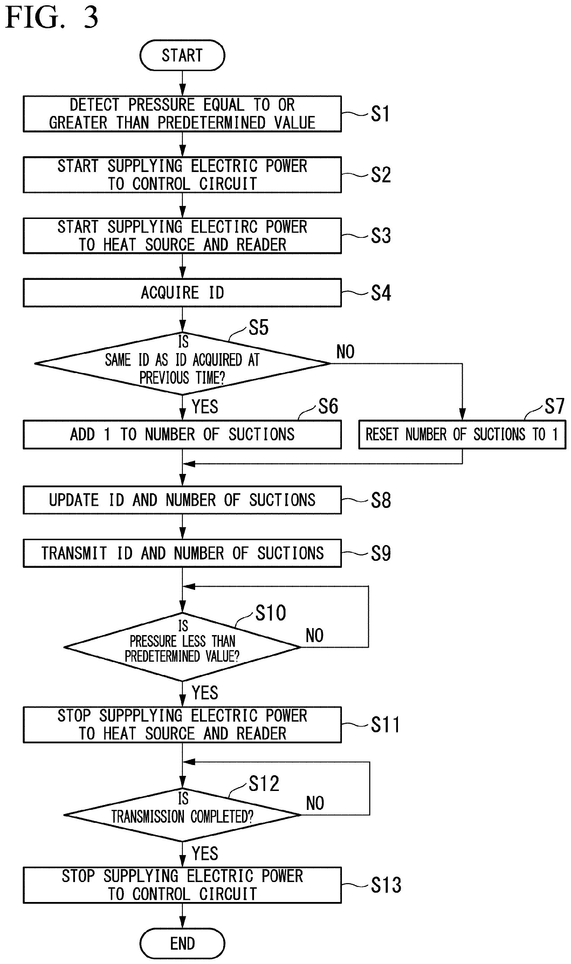

Fig. 3 is a flowchart showing the operation of the aerosol generation device according to the first embodiment. In Fig. 3, a case where the replaceable member (refill) 130 is a flavor capsule will be described as an example. In addition, in Fig. 3, the replaceable member (refill) 130 may be other than the flavor capsule. Further, in Fig. 3, a case where the cumulative number of suctions of one replaceable member (refill) 130 is stored in the volatile memory or the non-volatile memory will be described as an example.

When the user starts the suction operation from the suction end E1, a negative pressure (pressure) is generated inside the aerosol generation device 100, and the negative pressure (pressure) is detected by the sensor 112. When the sensor 112 detects a pressure which is equal to or greater than a predetermined value (step S1), the battery 111 starts supplying the electric power to the control circuit 113 (step S2). When the control circuit 113 supplied with the electric power starts to be activated, the battery 111 starts supplying the electric power to the heat source 122 and the reader 123 included in the atomizing unit 124 (step S3). As a result, the heat source 122 heats the aerosol source of the atomization unit 120, and the reader 123 reads a capsule ID from the identifier 131 of the flavor capsule 130.

The control circuit 113 acquires the capsule ID read from the reader 123 (step S4). The control circuit 113 determines whether or not the read capsule ID is the same as the capsule ID at a time of the previous activation which is stored in the volatile or non-volatile memory (storage unit 114) (step S5). In a case where the acquired capsule ID is the same as the capsule ID acquired at the time of the previous activation (step S5: YES), the control circuit 113 adds "1" to the number of suctions stored in the volatile or non-volatile memory (storage unit 114) (step S6). On the other hand, in a case where the acquired capsule ID is different from the capsule ID acquired at the time of the previous activation (step S5: NO), the control circuit 113 resets the number of suctions stored in the volatile or non-volatile memory (storage unit 114) to "1" (step S7). In step S7, in a case where the acquired capsule ID is different from the capsule ID acquired at the time of the previous activation, the control circuit 113 determines that the capsule ID is replaced with a new flavor capsule and calculates the number of suctions for the replaced new flavor capsule. The control circuit 113 updates the capsule ID of the flavor capsule 130 and the number of suctions which are stored in the non-volatile memory (step S8). The control circuit 113 transmits the usage information including the capsule ID of the flavor capsule 130 and the number of suctions to the communication device 200 (step S9). The aerosol generation device 100 and the communication device 200 may be paired in advance.

The control circuit 113 determines whether or not the pressure detected by the sensor 112 is less than the predetermined value (step S10). In a case where the pressure detected by the sensor 112 is equal to or greater than the predetermined value (step S10: NO), the supply of the electric power to the heat source 122 and the reader 123 is continued. On the other hand, in a case where the pressure detected by the sensor 112 is less than the predetermined value (step S10: YES), the control circuit 113 causes the battery 111 to stop supplying the electric power to the heat source 122 and the reader 123 (step S11).

The control circuit 113 determines whether or not the transmission of the usage information in step S9 is completed (step S12). In a case where the transmission of the usage information is not completed (step S12: NO), the supply of the electric power to the control circuit 113 is continued. On the other hand, in a case where the transmission of the usage information is completed (step S12: YES), the control circuit 113 causes the battery 111 to stop supplying the electric power to the control circuit 113 (step S13). The control circuit 113 stops supplying the electric power to the control circuit 113 at a later timing of a timing at which the pressure of the sensor 112 is lower than a predetermined pressure and a timing at which the transmission of the usage information is completed.

As described above, the control circuit 113 according to the first embodiment transmits the usage information to the communication device 200 for each suction operation of the user.

In another embodiment, the control circuit 113 may measure a total suction time instead of the number of suctions and transmit the total suction time to the communication device 200. The total suction time is, for example, a sum of times from the timing at which the pressure detected by the sensor 112 is equal to or greater than the predetermined value to the timing at which the pressure is less than the predetermined value. The suction time is not fixed until the suction is terminated. Therefore, in a case where the total suction time is transmitted, the control circuit 113 updates the total suction time after the pressure detected by the sensor 112 is less than the predetermined value, and transmits the usage information. The number of suctions and the total suction time are examples of a usage amount.

### «Communication Device»

As described above, the communication device 200 is a terminal, such as a smartphone or a tablet terminal, having a communication function. The communication device 200 has at least a short-range wireless communication function such as Bluetooth (registered trademark) and a wireless communication function via a wide area communication network such as the Internet. The communication device 200 may have a wired communication function. The communication device 200 and the aerosol generation device 100 communicate with each other by, for example, the short-range wireless communication, and the communication device 200 and the information providing server 300 communicate with each other by the wireless communication function via the network 400 including, for example, the wide area communication network.

The communication device 200 is installed with, for example, an application program for displaying information related to the aerosol generation device 100 by the user. The communication device 200 receives the usage information from the aerosol generation device 100 by executing the application program, and transmits the usage information to the information providing server 300.

The communication device 200 receives and displays information related to a replacement timing of the replaceable member (refill) 130 and information related to a purchase timing of the replaceable member (refill) 130 as the information related to the aerosol generation device 100 from the information providing server 300.

The transmission of the usage information and the reception of the information related to the aerosol generation device 100 may be performed using a communication tool such as Social Networking Service (SNS).

### <<Information Providing Server>>

The information providing server 300 collects the usage information from the aerosol generation device 100 via the communication device 200, and generates the information related to the replacement timing of the replaceable member (refill) 130 and the information related to the purchase timing of the replaceable member (refill) 130 based on the usage information. The information providing server 300 transmits the generated information to the communication device 200.

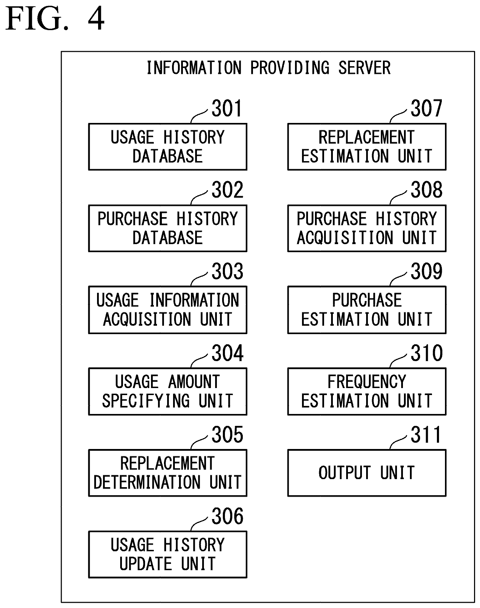

Fig. 4 is a schematic block diagram showing a configuration of the information providing server according to the first embodiment.

The information providing server 300 includes a usage history database 301, a purchase history database 302, a usage information acquisition unit 303, a usage amount specifying unit 304, a replacement determination unit 305, a usage history update unit 306, a replacement estimation unit 307, a purchase history acquisition unit 308, a purchase estimation unit 309, a frequency estimation unit 310, and an output unit 311.

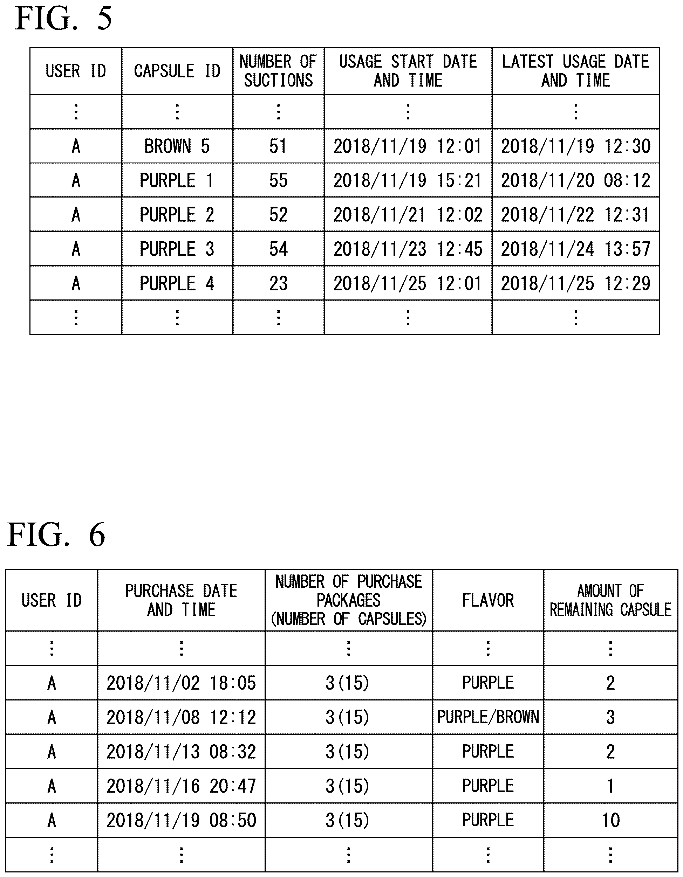

Fig. 5 is an example of the usage history database according to the first embodiment. In Fig. 5, the case where the replaceable member (refill) 130 is the flavor capsule will be described as an example. In Fig. 5, the replaceable member (refill) 130 may be other than the flavor capsule.

A usage history of the aerosol generation device 100 for a plurality of users is recorded in the usage history database 301. Specifically, a user ID identifying the user, a capsule ID of the flavor capsule 130, the number of suctions of the flavor capsule 130, a usage start timing of the flavor capsule 130, and a final usage timing of the flavor capsule 130 in association with each other are recorded in the usage history database 301. By referring to the usage history database 301, the information providing server 300 specifies the average number of suctions in a case where one capsule is replaced, the number of remaining suctions until the replacement timing, an average usage period, and the like. The usage history database 301 is updated each time the usage information is received from the aerosol generation device 100.

Fig. 6 is an example of the purchase history database according to the first embodiment. In Fig. 6, the case where the replaceable member (refill) 130 is the flavor capsule will be described as an example. In Fig. 6, the replaceable member (refill) 130 may be other than the flavor capsule.

The purchase history of a package of flavor capsules 130 for a plurality of users is recorded in the purchase history database 302. Specifically, the user ID, the purchase date and time of the package of the flavor capsule 130, the number of purchases of the package, the flavor type of the flavor capsule 130, the amount of remaining capsule, and information indicating whether or not notification of the purchase timing is completed are recorded in the purchase history database 302 in association with each other. The information providing server 300 specifies the amount of remaining flavor capsule 130 at the purchase timing by referring to the purchase history database 302. The purchase history database 302 is updated each time an affiliated Electronic Commerce (EC) service or an affiliated physical store Point of Sale (POS) device receives information related to the purchase of the flavor capsule 130.

The usage information acquisition unit 303 receives the usage information of the aerosol generation device 100 from the communication device 200 via the wide area communication network. The usage information acquisition unit 303 is capable of specifying the user of the aerosol generation device 100 by acquiring the user ID set in the application program of the communication device 200.

The usage amount specifying unit 304 acquires the number of suctions of the replaceable member (refill) 130 based on the usage information received by the usage information acquisition unit 303.

The replacement determination unit 305 determines whether or not the replaceable member (refill) 130 is replaced based on the usage information received by the usage information acquisition unit 303. For example, in a case where the identifier 131 (for example, the capsule ID) included in the usage information is different from the identifier 131 included in the usage information previously received from the aerosol generation device 100 of the same user, the replacement determination unit 305 determines that the replaceable member (refill) 130 is replaced. In another embodiment, in a case where the number of suctions included in the usage information is less than the number of suctions included in the previously received usage information or in a case where the number of suctions is 1, the replacement determination unit 305 may determine that the replaceable member (refill) 130 is replaced.

The usage history update unit 306 updates the usage history database 301 and the purchase history database 302 based on a determination result of the replacement determination unit 305. Specifically, in a case where the replaceable member (refill) 130 is not replaced, the usage history update unit 306 updates the number of suctions and the final usage date and time, which are associated with the identifier 131 included in the usage information received by the usage information acquisition unit 303, in the usage history database 301. On the other hand, in a case where the replaceable member (refill) 130 is replaced, the usage history update unit 306 adds information related to the number of suctions related to the identifier 131, the usage start date and time, and the final usage date and time, which are included in the usage information received by the usage information acquisition unit 303, to the usage history database 301. At this time, the usage history update unit 306 subtracts one from the current amount of remaining capsule of the user, which is recorded in the purchase history database 302.

The replacement estimation unit 307 estimates the replacement timing based on the usage history of the replaceable member (refill) 130 recorded in the usage history database 301. Specifically, the replacement estimation unit 307 obtains the average number of suctions at the replacement timing of the replaceable member (refill) 130 based on the usage history, and estimates the number of remaining suctions until the replacement timing based on a difference between the current number of suctions and the average number of suctions at the timing of replacement.

The replacement estimation unit 307 may estimate the replacement timing by machine learning, a neural network, or deep learning.

The neural network includes, for example, a hierarchical neural network, a deep neural network, and the like. The neural network is a network with a hierarchical structure. The neural network is composed of, for example, an input layer, an intermediate layer, and an output layer, and each layer includes a plurality of nodes. Then, the neural network sets arbitrary weights of the nodes between the input layer and the intermediate layer and between the intermediate layer and the output layer, adjusts a coupling states between the nodes, and is capable to solve a classification problem. Further, the neural network may be a mutual coupling-type neural network or the like. Further, the neural network may be, for example, a simple perceptron, a back propagation, a support vector machine, a Hopfield model, a self-organizing map, or the like.

For example, the replacement estimation unit 307 generates a plurality of teacher data based on the usage history and predetermined information associated with the usage history, and learns a set of input information (for example, the current number of suctions) and output information (for example, the number of remaining suctions until the replacement timing). The predetermined information may be, for example, information such as information related to the type of replaceable member (refill) 130, information related to a type of the aerosol generation device 100, information related to a weather at the time of suction, information related to a season, information related to a time used, or information related to a location, and may be the any information as long as information which is corresponding to the usage history.

The replacement estimation unit 307 is capable of receiving the input information of the current number of suctions and outputting the output information of the appropriate number of remaining suctions until the replacement timing by using the machine learning, the neural network, or the deep learning.

The purchase history acquisition unit 308 acquires the purchase history of the replaceable member (refill) 130 of a certain user from the purchase history database 302.

The purchase estimation unit 309 estimates the purchase timing of the replaceable member (refill) 130 based on the purchase history acquired by the purchase history acquisition unit 308. Specifically, the purchase estimation unit 309 obtains the average amount of remaining capsule at the purchase timing of the replaceable member (refill) 130 based on the purchase history, and estimates the number of remaining capsules until the purchase timing based on the difference between the current amount of remaining capsule and the average amount of remaining capsule at the replacement timing.

The purchase estimation unit 309 may estimate the replacement timing by the machine learning, the neural network, or the deep learning.

For example, the purchase estimation unit 309 generates a plurality of teacher data based on the purchase history and predetermined information associated with the purchase history, and learns a set of the input information (for example, the current amount of remaining capsule) and the output information (for example, the number of remaining capsules until the purchase timing). The predetermined information may be, for example, such as information related to a type of the capsule, the information related to the type of aerosol generation device 100, the information related to the weather and the information related to the season at the time of purchase, or information related to purchase quantity, and may be the any information as long as information corresponding to the purchase history.

The purchase estimation unit 309 is capable of receiving the input information of the current amount of remaining capsule using the machine learning, the neural network, or the deep learning, and outputting the output information of the number of remaining capsules until the appropriate purchase timing.

The frequency estimation unit 310 estimates the usage frequency of the aerosol generation device 100 based on the usage history of the replaceable member (refill) 130 recorded in the usage history database 301. Specifically, the frequency estimation unit 310 estimates the usage frequency of the aerosol generation device 100 by dividing a time from the usage start date and time of the replaceable member (refill) 130 to the final usage date and time into the number of suctions based on the usage history. The frequency estimation unit 310 may specify a replacement interval of the replaceable member (refill) 130 instead of the usage frequency. The replacement interval is an aspect of the usage frequency.

The frequency estimation unit 310 may estimate the usage frequency and the replacement interval by the machine learning, the neural network, or the deep learning.

The output unit 311 transmits the information related to the aerosol generation device 100 to the communication device 200. Specifically, in a case where the number of remaining suctions until the replacement timing estimated by the replacement estimation unit 307 reaches the predetermined number of times (for example, 5 times), the output unit 311 transmits information indicating that the replacement timing of the replaceable member (refill) 130 is near to the communication device 200. The predetermined number of times may be any number. Further, in a case where the number of the remaining replaceable members (refills) 130 until the purchase timing estimated by the purchase estimation unit 309 reaches a predetermined number (for example, 0), the output unit 311 transmits information for promoting the purchase of a package of the replaceable members (refills) 130 to the communication device 200. The predetermined number may be any number. Further, in a case where the usage frequency estimated by the frequency estimation unit 310 is lowered, the output unit 311 transmits information for proposing a different flavor of the replaceable member (refill) 130 or a different model of the aerosol generation device 100 to the communication device 200.

### «Operation of Information Providing System»

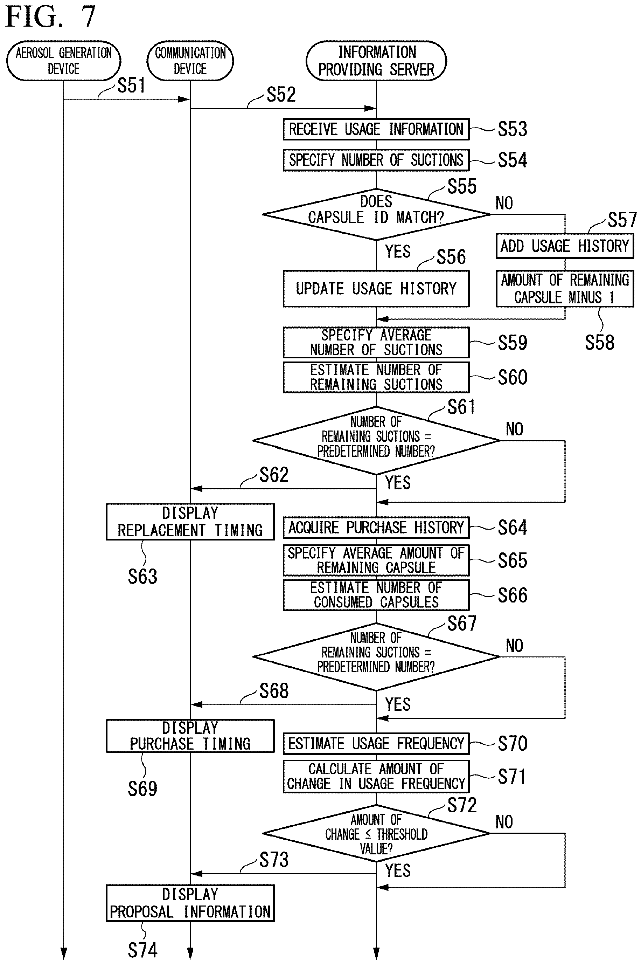

Fig. 7 is a sequence diagram showing an operation of the information providing system according to the first embodiment. InFig. 7, the case where the replaceable member (refill) 130 is the flavor capsule will be described as an example. InFig. 7, the replaceable member (refill) 130 may be other than the flavor capsule.

The aerosol generation device 100 generates the usage information by the processes of steps S1 to S13 described above, and transmits the usage information to the communication device 200 using the short-range wireless communication (step S51). When the usage information is received from the aerosol generation device 100, the communication device 200 transmits the usage information to the information providing server 300 (step S52).

The usage information acquisition unit 303 of the information providing server 300 receives the usage information from the communication device 200 (step S53). The usage amount specifying unit 304 specifies the number of suctions of the flavor capsule 130 based on the usage information received in step S53 (step S54). The replacement determination unit 305 determines whether or not the capsule ID included in the usage information received in step S53 matches the capsule ID associated with the newest final usage date and time stored in association with the user in the usage history database 301 (step S55).

In a case where the capsule IDs are the same (step S55: YES), the replacement determination unit 305 determines that the flavor capsule 130 is not replaced. On the other hand, in a case where the capsule IDs are different (step S55: NO), the replacement determination unit 305 determines that the flavor capsule 130 is replaced.

In a case where the replacement determination unit 305 determines that the flavor capsule 130 is not replaced (step S55: YES), the usage history update unit 306 updates the number of suctions and the final usage date and time, which are associated with the capsule ID included in the usage information received by the usage information acquisition unit 303, in the usage history database 301 (step S56).

On the other hand, in a case where the replacement determination unit 305 determines that the flavor capsule 130 is replaced (step S55: NO), the usage history update unit 306 adds, to the usage history database 301, information related to the number of suctions related to the capsule ID, the usage start date and time, and the final usage date and time included in the usage information received by the usage information acquisition unit 303 (step S57). At this time, the usage history update unit 306 subtracts one from the amount of remaining capsule recorded in the purchase history database 302 in association with the user ID of the user and the last purchase date and time (step S58).

The replacement estimation unit 307 calculates the average number of suctions at the replacement timing of the flavor capsule 130 based on the usage history (step S59). The average number of suctions may be the average number of suctions related to some flavor capsules 130 used most recently, or may be the average number of suctions related to all the flavor capsules 130 used in the past. The replacement estimation unit 307 estimates the number of remaining suctions until the replacement timing by subtracting the number of suctions specified in step S54 from the average number of suctions calculated in step S59 (step S60).

The output unit 311 determines whether or not the number of remaining suctions estimated in step S60 is equal to the predetermined number of times (step S61). In a case where the number of remaining suctions is equal to the predetermined number of times (step S61: YES), the output unit 311 transmits information indicating that the replacement timing of the flavor capsule 130 is near to the communication device 200 (step S62). On the other hand, in a case where the number of remaining suctions is different from the predetermined number of times (step S61: NO), the output unit 311 does not transmit information indicating that the replacement timing is near to the communication device 200. In the first embodiment, the output unit 311 does not also transmit information indicating that the replacement timing is near in a case where the number of remaining suctions is less than the predetermined number of times. Therefore, it is possible to prevent the information transmitted to the communication device 200 from becoming excessive.

When the communication device 200 receives the information indicating that the replacement timing is near from the information providing server 300, the communication device 200 displays the information (step S63). Therefore, the user can recognize the replacement timing of the flavor capsule 130.

Further, the purchase history acquisition unit 308 of the information providing server 300 acquires the purchase history of the replaceable member (refill) 130 in a certain user from the purchase history database 302 (step S64). The purchase estimation unit 309 calculates the average amount of remaining capsule at the replacement timing of the replaceable member (refill) 130 based on the purchase history acquired in step S64 (step S65). The average amount of remaining capsule may be the average value of the amount of remaining capsule related to some flavor capsules 130 used most recently, or may be the average value of the amount of remaining capsule related to all the flavor capsules 130 used in the past. The purchase estimation unit 309 estimates the number of capsules consumed until the purchase timing by subtracting the current amount of remaining capsule from the average amount of remaining capsule at the replacement timing (step S66). In a case where the purchase history cannot be obtained from either the EC service or the POS terminal, the average amount of remaining capsule can be a negative number. In a case where the average amount of remaining capsule is a negative number, the flavor capsule 130 is purchased in a service in which the purchase history cannot be acquired.

The output unit 311 determines whether or not the number of consumed capsules estimated in step S66 is equal to the predetermined number (step S67). In a case where the number of consumed capsules is equal to the predetermined number (step S67: YES), the output unit 311 transmits information indicating that the purchase timing of the flavor capsule 130 is near to the communication device 200 (step S68). On the other hand, in a case where the number of consumed capsules is different from the predetermined number (step S67: NO), the output unit 311 does not transmit the information indicating that the purchase timing is near to the communication device 200.

In a case where the communication device 200 receives the information indicating that the purchase timing is near from the information providing server 300, the communication device 200 displays the information (step S69). Therefore, the user can recognize the purchase timing of the flavor capsule 130.

The frequency estimation unit 310 estimates the usage frequency related to some flavor capsules 130 used most recently in the aerosol generation device 100 by dividing the time from the usage start date and time of the flavor capsule 130 to the final usage date and time into the number of suctions based on the usage history (step S70). The frequency estimation unit 310 calculates the amount of change in the usage frequency based on the estimated usage frequency (step S71).

The output unit 311 determines whether or not the amount of change in the usage frequency is equal to or less than a predetermined threshold value (negative number) (step S72). The output unit 311 determines whether or not the amount of change in the usage frequency is lowered. In a case where the amount of change in the usage frequency is equal to or less than the predetermined threshold value (step S72: YES), the information for proposing the flavor capsule 130 of a different flavor from the flavor purchased in the past and recorded in the purchase history database 302 or a different model of the aerosol generation device 100 is transmitted to the communication device 200 (step S73).

In a case where the information for proposing the flavor capsule 130 or the aerosol generation device 100 is received from the information providing server 300, the communication device 200 displays the information (step S74).

### «Effects»

As described above, according to the first embodiment, the information providing server 300 estimates the purchase timing of the package of the replaceable members (refills) 130 based on the usage information of the aerosol generation device 100, and transmits the information at the purchase timing. Therefore, the information providing server 300 is capable of informing an appropriate purchase timing of the replaceable member (refill) 130 of the aerosol generation device 100 to the user.

Further, according to the first embodiment, the information providing server 300 acquires the purchase history of the replaceable member (refill) 130, and estimates the purchase timing of the package of the replaceable member (refill) 130 based on the usage information and the purchase history. Therefore, the information providing server 300 is capable of specifying the number of replaceable members (refills) 130 actually purchased by the user from the purchase history, so that the purchase timing is appropriately estimated. In another embodiment, the information providing server 300 may transmit the information related to the purchase timing in a case where a predetermined number of (for example, the number of replaceable members (refills) 130 stored in one set) replaceable members (refills) 130 is consumed regardless of the purchase history.

Further, according to the first embodiment, the information providing server 300 specifies the usage amount of the replaceable member (refill) 130 based on the usage information, and transmits the information related to the replacement timing estimated based on the usage amount. Therefore, the information providing server 300 is capable of informing an appropriate replacement timing of the replaceable member (refill) 130 to the user. In another embodiment, the information providing server 300 may not transmit the information related to the replacement timing.

Further, according to the first embodiment, the information providing server 300 estimates the purchase timing of the replaceable member (refill) 130 based on the usage information and the history of the replacement timing. Therefore, the information providing server 300 appropriately estimates the purchase timing. In another embodiment, the information providing server 300 may estimate the purchase timing of the replaceable member (refill) 130 without using the history of the replacement timing.

Further, according to the first embodiment, the information providing server 300 determines whether or not the replaceable member (refill) 130 is replaced based on the usage information, and estimates the replacement timing based on the usage amount at a timing when it is determined that the replaceable member (refill) 130 has been replaced. Therefore, the information providing server 300 is capable of estimating the replacement timing according to the user even in a case where the usage amount until the replacement differs depending on the user. In another embodiment, the replacement timing may be estimated based on a predetermined usage amount (for example, a recommended usage amount).

Further, according to the first embodiment, the usage frequency of the aerosol generation device 100 is estimated based on the replacement timing and in a case where the usage frequency is low, the information providing server 300 transmits the information for proposing the different flavor of the replaceable member (refill) 130 or the different model of the aerosol generation device 100 to the communication device 200. In another embodiment, the change in the usage frequency may be transmitted to the communication device 200 as information related to the usage frequency. In this case, for example, it is possible to cause a user who is trying to quit smoking to recognize a progress of quitting smoking by presenting a history of usage frequency.

### <Second Embodiment>

The user of the aerosol generation device 100 normally performs a suction operation of the aerosol generation device 100 in a smoking area or the like, and does not perform the suction operation in other locations. Therefore, a suction opportunity is limited for the user, and the user is dissatisfied that the suction operation cannot be performed as many times as the user is satisfied with the suction opportunity due to consumption of the replaceable member (refill) 130. An information providing system 1 according to a second embodiment secures the number of suctions with which the user is satisfied at the suction opportunity, and provides information related to the replacement timing to the user.

The second embodiment is different from the first embodiment in operations of the control circuit 113 of the aerosol generation device 100 and the information providing server 300.

### «Operation of Aerosol Generation Device 100»

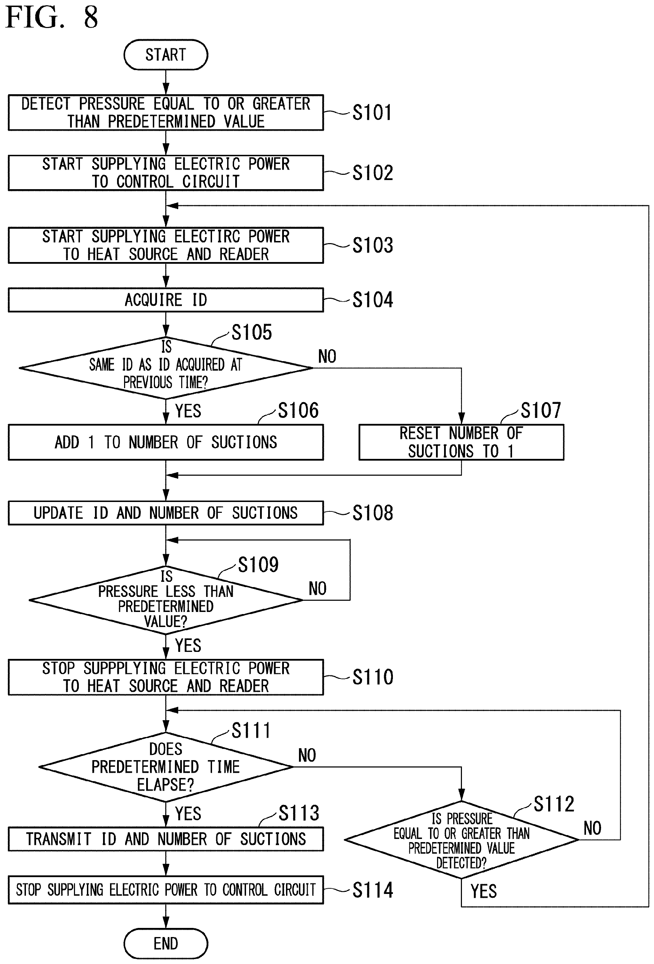

Fig. 8 is a flowchart showing an operation of the aerosol generation device according to the second embodiment. In Fig. 8, the case where the replaceable member (refill) 130 is the flavor capsule will be described as an example. In Fig. 8, the replaceable member (refill) 130 may be other than the flavor capsule.

When the user starts the suction operation from the suction end E1, the negative pressure (pressure) is generated inside the aerosol generation device 100. When the sensor 112 detects a pressure equal to or greater than the predetermined value (step S101), the battery 111 starts supplying electric power to the control circuit 113 (step S 102). When the control circuit 113 is activated, the battery 111 starts supplying the electric power to the heat source 122 and the reader 123 (step S103). As a result, the heat source 122 heats the aerosol source of the atomization unit 120, and the reader 123 reads the capsule ID of the flavor capsule 130.

The control circuit 113 acquires the capsule ID read from the reader 123 (step S104). The control circuit 113 determines whether or not the read capsule ID is the same as the capsule ID at a time of the previous activation which is recorded in the non-volatile memory (step S105). In a case where the acquired capsule ID is the same as the capsule ID acquired at the time of the previous activation (step S105: YES), the control circuit 113 adds "1" to the number of suctions (step S106). On the other hand, in a case where the acquired capsule ID is different from the capsule ID acquired at the time of the previous activation (step S105: NO), the control circuit 113 resets the number of suctions to "1" (step S107). The control circuit 113 updates the capsule ID of the flavor capsule 130 and the number of suctions which are recorded in the non-volatile memory (step S108).

The control circuit 113 determines whether or not the pressure detected by the sensor 112 is less than the predetermined value (step S109). In a case where the pressure detected by the sensor 112 is equal to or greater than the predetermined value (step S109: NO), the supply of the electric power to the heat source 122 and the reader 123 is continued. On the other hand, in a case where the pressure detected by the sensor 112 is less than the predetermined value (step S109: YES), the control circuit 113 causes the battery 111 to stop supplying electric power to the heat source 122 and the reader 123 (step S110).

The control circuit 113 determines whether or not a predetermined time (for example, 5 minutes) passes after the supply of electric power to the heat source 122 and the reader 123 is stopped in step S110 (step S111). In a case where the predetermined time does not pass (step S111: NO), the control circuit 113 determines whether or not the sensor 112 detects the pressure equal to or greater than the predetermined value (step S112). In a case where the pressure equal to or greater than the predetermined value is not detected (step S112: NO), the control circuit 113 returns the process to step S111. On the other hand, in a case where the pressure equal to or greater than the predetermined value is detected (step S112: YES), the control circuit 113 returns the process to step S103 and starts supplying the electric power to the heat source 122 and the reader 123 again.

On the other hand, in a case where the predetermined time passes after the supply of the electric power to the heat source 122 and the reader 123 is stopped (step S111: YES), the control circuit 113 transmits the usage information including the capsule ID of the flavor capsule 130 and the number of suctions to the communication device 200 paired in advance (step S113). Further, the control circuit 113 causes the battery 111 to stop supplying the electric power to the control circuit 113 (step S114).

As above, the control circuit 113 according to the second embodiment transmits the usage information to the communication device 200 for each suction opportunity of the user. For example, the control circuit 113 does not transmit the number of suctions for each suction operation, and transmits the number of suctions for each suction opportunity (including a plurality of suction operations). Therefore, the number of times that the number of suctions is transmitted is reduced, as compared with a case where the number of suctions is transmitted for each suction operation.

### <<Information Providing Server>>

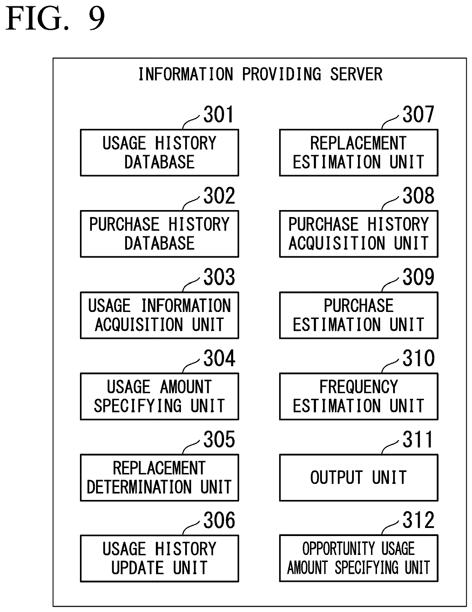

Fig. 9 is a schematic block diagram showing a configuration of an information providing server according to the second embodiment.

The information providing server 300 according to the second embodiment is different from the first embodiment in the information recorded in the usage history database 301, and further includes an opportunity usage amount specifying unit 312 in addition to the configuration of the first embodiment.

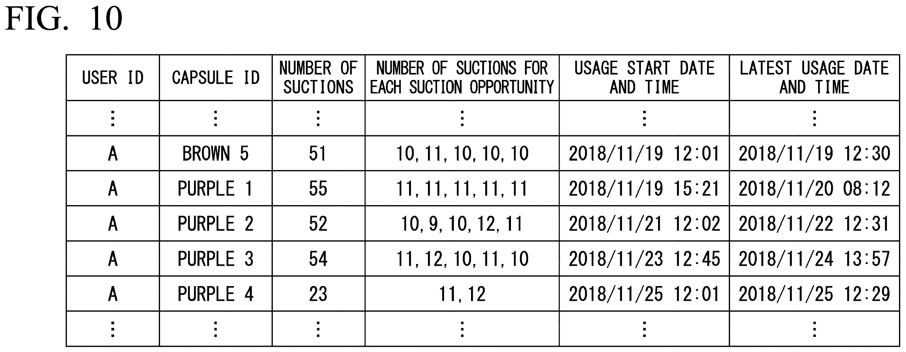

Fig. 10 is an example of a usage history database according to the second embodiment. In Fig. 10, the case where the replaceable member (refill) 130 is the flavor capsule will be described as an example. In Fig. 10, the replaceable member (refill) 130 may be other than the flavor capsule.

The user ID identifying the user, the capsule ID of the flavor capsule 130, the number of suctions of the flavor capsule 130, the number of suctions for each suction opportunity, the usage start timing of the flavor capsule 130, and the final usage timing of the flavor capsule 130 in associated with each other are recorded in the usage history database 301 according to the second embodiment. By referring to the usage history database 301, the information providing server 300 specifies the average number of suctions in the case where one capsule is replaced, the number of remaining suctions until the replacement timing, the average number of suctions at one suction opportunity, the average usage period, and the like. The usage history database 301 is updated each time the usage information is received from the aerosol generation device 100.

The opportunity usage amount specifying unit 312 specifies the number of suctions in one suction opportunity based on the usage information acquired by the usage information acquisition unit 303 and the usage history database 301. Specifically, the number of suctions in one suction opportunity is specified by subtracting the number of suctions recorded in the usage history database 301 in association with the same capsule ID as the usage information from the number of suctions included in the received usage information.

The opportunity usage amount specifying unit 312 may estimate the usage frequency or the replacement interval by the machine learning, the neural network, or the deep learning.

### «Operation of Information Providing System»

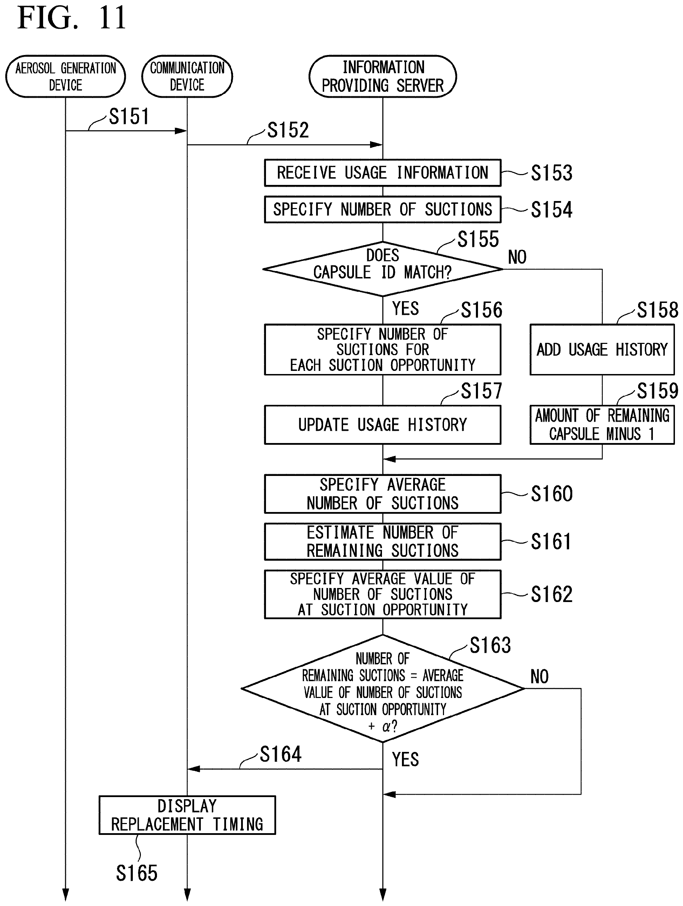

Fig. 11 is a sequence diagram showing an operation of the information providing system according to the second embodiment. In Fig. 11, the case where the replaceable member (refill) 130 is the flavor capsule will be described as an example. InFig. 11, the replaceable member (refill) 130 may be other than the flavor capsule.

The aerosol generation device 100 generates the usage information by performing the processes in steps S101 to S 114 described above, and transmits the usage information to the communication device 200 using, for example, the short-range wireless communication (step S151). When the communication device 200 receives the usage information from the aerosol generation device 100, the communication device 200 transmits the usage information to the information providing server 300 (step S152).

The usage information acquisition unit 303 of the information providing server 300 receives the usage information from the communication device 200 (step S 153). The usage amount specifying unit 304 specifies the number of suctions of the flavor capsule 130 based on the usage information received in step S153 (step S154). The replacement determination unit 305 determines whether or not the capsule ID included in the usage information received in step S53 matches the capsule ID associated with the newest final usage date and time stored in association with the user in the usage history database 301 (step S155).

In a case where the capsule IDs are the same (step S155: YES), the replacement determination unit 305 determines that the flavor capsule 130 is not replaced. On the other hand, in a case where the capsule IDs are different (step S155: NO), the replacement determination unit 305 determines that the flavor capsule 130 is replaced.

In a case where the replacement determination unit 305 determines that the flavor capsule 130 is not replaced (step S155: YES), the opportunity usage amount specifying unit 312 specifies the number of suctions in one suction opportunity based on the usage information acquired by the usage information acquisition unit 303 and the usage history database 301 (step S 156). The usage history update unit 306 updates the number of suctions associated with the capsule ID, the number of suctions for each suction opportunity, and the newest final usage date and time included in the usage information received by the usage information acquisition unit 303, in the usage history database 301 (step S157).

On the other hand, in a case where the replacement determination unit 305 determines that the flavor capsule 130 is replaced (step S155: NO), the usage history update unit 306 adds, to the usage history database 301, information related to the number of suctions related to the capsule ID, the usage start date and time, and the final usage date and time included in the usage information received by the usage information acquisition unit 303 (step S158). At this time, the usage history update unit 306 subtracts one from the amount of remaining capsule recorded in the purchase history database 302 in association with the user ID of the user and the last purchase date and time (step S159).

The replacement estimation unit 307 calculates the average number of suctions at the replacement timing of the flavor capsule 130 based on the usage history (step S160). The replacement estimation unit 307 estimates the number of remaining suctions until the replacement timing by subtracting the number of suctions specified in step S 154 from the average number of suctions calculated in step S160 (step S161). The replacement estimation unit 307 specifies the average value of the number of suctions at one suction opportunity of the user based on the usage history recorded in the usage history database 301 (step S162).

The output unit 311 determines whether or not the number of remaining suctions estimated in step S 161 is equal to a value acquired by adding a predetermined number of times to the average value of the number of suctions in one suction opportunity (step S163). In a case where the number of remaining suctions is equal to the predetermined number of times (step S163: YES), the output unit 311 transmits information indicating that the replacement timing of the flavor capsule 130 is near to the communication device 200 (step S164). On the other hand, in a case where the value obtained by adding the predetermined number of times to the average value of the number of suctions in one suction opportunity is different from the number of remaining suctions (step S 163: NO), the output unit 311 does not transmit the information indicating that the replacement timing is near to the communication device 200.

When the communication device 200 receives the information indicating that the replacement timing is near from the information providing server 300, the communication device 200 displays the information (step S 165). Therefore, the user can recognize the replacement timing of the flavor capsule 130.

Hereinafter, the information providing system 1 executes the same processes as in steps S64 to S74 of the first embodiment.

### «Effects»

As above, the information providing server 300 according to the second embodiment estimates the number of suctions for each suction opportunity based on the usage history, and estimates the purchase timing based on the number of suctions specified from the usage history and the number of suctions for each suction opportunity. Therefore, the information providing server 300 secures the number of suctions, with which the user is satisfied, at the suction opportunity, and is capable of providing the information related to the replacement timing to the user.

### <Third Embodiment>

In the information providing system 1 according to the first or second embodiment, the information providing server 300 generates the information related to the aerosol generation device 100, and the communication device 200 displays the information. In contrast, in an information providing system 1 according to a third embodiment, the communication device 200 generates the information related to the aerosol generation device 100. The information providing system 1 according to the third embodiment may not include the information providing server 300.

The communication device 200 according to the third embodiment has the same configuration as the information providing server 300 of the first embodiment. The communication device 200 includes the usage history database 301, the purchase history database 302, the usage information acquisition unit 303, the usage amount specifying unit 304, the replacement determination unit 305, the usage history update unit 306, the replacement estimation unit 307, and the purchase history acquisition unit 308, the purchase estimation unit 309, the frequency estimation unit 310, and the output unit 311.

### «Operation of Information Providing System»

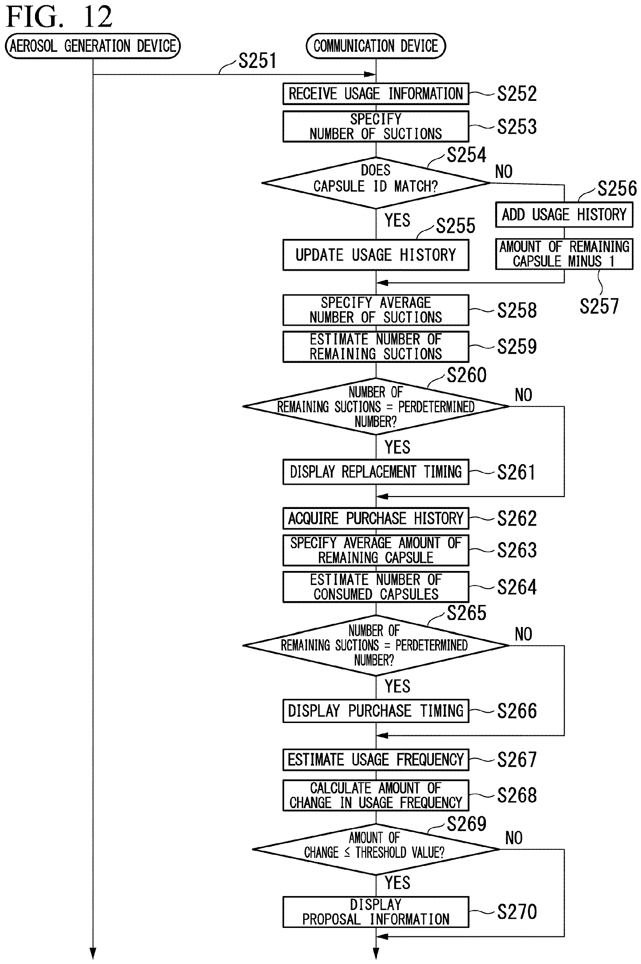

Fig. 12 is a sequence diagram showing an operation of the information providing system according to the third embodiment. InFig. 12, the case where the replaceable member (refill) 130 is the flavor capsule will be described as an example. InFig. 12, the replaceable member (refill) 130 may be other than the flavor capsule.

The aerosol generation device 100 generates the usage information by the same processes as in the first embodiment, and transmits the usage information to the communication device 200 using the short-range wireless communication (step S251). The usage information acquisition unit 303 of the communication device 200 receives the usage information from the communication device 200 (step S252). The usage amount specifying unit 304 specifies the number of suctions of the flavor capsule 130 based on the usage information received in step S252 (step S253). The replacement determination unit 305 determines whether or not the capsule ID included in the usage information received in step S252 matches the capsule ID associated with the newest final usage date and time stored in association with the user in the usage history database 301 (step S254).

In a case where the capsule IDs are the same (step S254: YES), the replacement determination unit 305 determines that the flavor capsule 130 is not replaced. On the other hand, in a case where the capsule IDs are different (step S254: NO), the replacement determination unit 305 determines that the flavor capsule 130 is replaced.

In a case where the replacement determination unit 305 determines that the flavor capsule 130 is not replaced (step S254: YES), the usage history update unit 306 updates the number of suctions associated with the capsule ID included in the usage information received by the usage information acquisition unit 303 and the newest final usage date and time in the usage history database 301 (step S255).

On the other hand, in a case where the replacement determination unit 305 determines that the flavor capsule 130 is replaced (step S254: NO), the usage history update unit 306 adds, to the usage history database 301, information related to the number of suctions related to the capsule ID, the usage start date and time, and the final usage date and time included in the usage information received by the usage information acquisition unit 303 (step S255). At this time, the usage history update unit 306 subtracts one from the amount of remaining capsule recorded in the purchase history database 302 in association with the user ID of the user and the last purchase date and time (step S257).

The replacement estimation unit 307 calculates the average number of suctions at the replacement timing of the flavor capsule 130 based on the usage history (step S258). The replacement estimation unit 307 estimates the number of remaining suctions until the replacement timing by subtracting the number of suctions specified in step S253 from the average number of suctions calculated in step S258 (step S259).

The output unit 311 determines whether or not the number of remaining suctions estimated in step S259 is equal to the predetermined number of times (step S260). In a case where the number of remaining suctions is equal to the predetermined number of times (step S260: YES), the output unit 311 displays information indicating that the replacement timing of the flavor capsule 130 is near to the communication device 200 (step S261). Therefore, the user can recognize the replacement timing of the flavor capsule 130. On the other hand, in a case where the number of remaining suctions is different from the predetermined number of times (step S260: NO), the output unit 311 does not display the information indicating that the replacement timing is near.

Further, the purchase history acquisition unit 308 acquires the purchase history of the replaceable member (refill) 130 of a certain user from the purchase history database 302 (step S262). The purchase estimation unit 309 obtains the average amount of remaining capsule in a case where the replaceable member (refill) 130 is purchased based on the purchase history acquired in step S262 (step S263). The purchase estimation unit 309 estimates the number of capsules consumed until the purchase timing by subtracting the current amount of remaining capsule from the average amount of remaining capsule at the replacement timing (step S264).

The output unit 311 determines whether or not the number of consumed capsules estimated in step S264 is equal to a predetermined number (step S265). In a case where the number of consumed capsules is equal to the predetermined number (step S265: YES), the output unit 311 displays the information indicating that the purchase timing of the replaceable member (refill) 130 is near (step S266). Therefore, the user can recognize the purchase timing of the replaceable member (refill) 130.

On the other hand, in a case where the number of consumed capsules is different from the predetermined number (step S265: NO), the output unit 311 does not display the information indicating that the purchase timing is near.

The frequency estimation unit 310 estimates the usage frequency related to some flavor capsules 130 used most recently in the aerosol generation device 100 by dividing the time from the usage start date and time of the flavor capsule 130 to the final usage date and time into the number of suctions based on the usage history (step S267). The frequency estimation unit 310 calculates the amount of change in the usage frequency based on the estimated usage frequency (step S268).

The output unit 311 determines whether or not the amount of change in the usage frequency is equal to or less than the predetermined threshold value (negative number) (step S269). The output unit 311 determines whether or not the amount of change in the usage frequency is lowered. In a case where the amount of change in the usage frequency is equal to or less than the predetermined threshold value (step S269: YES), the information for proposing the flavor capsule 130 of a different flavor from the flavor purchased in the past and recorded in the purchase history database 302 or a different model of the aerosol generation device 100 is displayed (step S270).

Although some embodiments are described in detail with reference to the drawings, the specific configuration is not limited to the above description, and various design changes and the like are possible.

For example, in the above-described embodiment, although the number of suctions or the total suction time is stored in the usage information, the present invention is not limited thereto. For example, in another embodiment, in a case where the usage amount such as the number of suctions is not included, the number of suctions may be specified in such a way that the usage amount specifying unit 304 adds "1" to the number of suctions whenever the usage information acquisition unit 303 receives the received usage information. Further, for example, in another embodiment, in a case where the suction time required for one suction is stored in the usage information, the usage amount specifying unit 304 may specify the total suction time by integrating the suction time.

Further, in the above-described embodiment, although the information providing server 300 transmits the information to the communication device 200, the present invention is not limited thereto. For example, in another embodiment, the information may be transmitted to a server device of a communication tool, such as SNS, or a portal site accessed by the user. Further, in another embodiment, the information providing server 300 may transmit information related to the automatic purchase of the replaceable member (refill) 130 as the information related to the purchase timing. In a case where the information related to the automatic purchase of the replaceable member (refill) 130 is received, the communication device 200 displays a button for selecting whether or not an order is required, and the replaceable member (refill) 130 is ordered when the user presses the button. Further, in another embodiment, the information providing server 300 may automatically perform an order processing to an affiliated EC service.

Further, in the above-described embodiment, although the information providing server 300 transmits the information related to the replacement timing or the purchase timing at a predetermined timing based on the replacement timing or the purchase timing, the present invention is not limited thereto. For example, the information providing server 300 according to another embodiment may transmit the information related to the replacement timing or the purchase timing when the user is requested by the application program of the communication device 200, and may transmit the information for each suction opportunity.

Further, in the above-described embodiment, although the information providing system 1 provides the information related to the purchase timing and the replacement timing of the replaceable member (refill) 130, the present invention is not limited thereto. In another embodiment, the information providing system 1 may provide information related to a purchase timing and a replacement timing of the atomization unit 120. Further, in a case where the aerosol generation device 100 according to another embodiment is the heat-not-burn tobacco, the information providing system 1 may provide information related to a purchase timing and a replacement timing of the tobacco stick. Further, in a case where the aerosol generation device 100 according to another embodiment is E-Vapor, the information providing system 1 may Provide information related to the purchase timing and replacement timing of the tank including the liquid.

### <Computer Configuration>

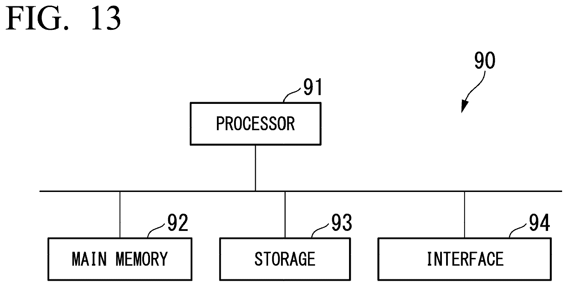

Fig. 13 is a schematic block diagram showing a configuration of a computer according to at least one embodiment.

A computer 90 includes a processor 91, a main memory 92, a storage 93, and an interface 94.

The communication device 200 and the information providing server 300 described above are mounted on the computer 90. Further, the operation of each processing unit described above is stored in the storage 93 in a form of a program. The processor 91 reads the program from the storage 93, expands the program into the main memory 92, and executes the above process according to the program. Further, the processor 91 secures a storage area corresponding to each of the above-described storage units in the main memory 92 according to the program.

The program may be used to realize a part of the functions exhibited by the computer 90. For example, the program exhibits the function through a combination with another program stored in the storage in advance or a combination with another program installed in another device. In another embodiment, the computer may include a customized Large Scale Integrated Circuit (LSI), such as a Programmable Logic Device (PLD), in addition to or instead of the above configuration. The PLD may be, for example, a Programmable Array Logic (PAL), a Generic Array Logic (GAL), a Complex Programmable Logic Device (CPLD), or a Field Programmable Gate Array (FPGA). In this case, some or all of the functions realized by the processor may be realized by an integrated circuit.

The storage 93 may be, for example, a Hard Disk Drive (HDD), a Solid State Drive (SSD), a magnetic disk, an optical magnetic disk, a Compact Disc Read Only Memory (CD-ROM), a Digital Versatile Disc Read Only Memory (DVD-ROM), a semiconductor memory, or the like. The storage 93 may be internal media directly connected to a bus of the computer 90, or external media connected to the computer 90 via the interface 94 or a communication line. Further, in a case where the program is distributed to the computer 90 via the communication line, the computer 90 which receives the distribution may expand the program in the main memory 92 and execute the above process. In at least one embodiment, the storage 93 is a nontemporary tangible storage medium.

Further, the program may be provided to realize a part of the above-described functions. Further, the program may be a so-called difference file (a difference program) that realizes the above-described function in combination with another program already stored in the storage 93.

### [Industrial Applicability]

The information processing apparatus is capable of specifying an appropriate purchase timing for the replaceable member (refill) of the aerosol generation device.

### [Reference Signs List]

- 1:: Information providing system
- 100:: Aerosol generation device
- 110:: Power supply unit
- 111:: Battery
- 112:: Sensor
- 113:: Control circuit
- 114:: Storage unit
- 115:: Notification unit
- 120:: Atomization unit
- 121:: Insertion hole
- 122:: Heat source
- 123:: Reader
- 124:: Reservoir
- 125:: Atomizing unit
- 126:: Air intake flow path
- 127:: Aerosol flow path
- 128:: Mouthpiece
- 129:: Arrow
- 130:: Replaceable member (refill)
- 131:: Identifier
- 132:: Flavor source
- 200:: Communication device
- 300:: Information providing server
- 301:: Usage history database
- 302:: Purchase history database
- 303:: Usage information acquisition unit
- 304:: Usage amount specifying unit
- 305:: Replacement determination unit
- 306:: Usage history update unit
- 307:: Replacement estimation unit
- 308:: Purchase history acquisition unit
- 309:: Purchase estimation unit
- 310:: Frequency estimation unit
- 311:: Output unit
- 312:: Opportunity usage amount specifying unit
- 400:: Network

## Claims

1. An information processing apparatus comprising:
a usage information acquisition unit that acquires usage information of an aerosol generation device to which a replaceable member consumed with use is attachable;
a purchase estimation unit that estimates a purchase timing of the member purchased in plurality based on the acquired usage information; and
an output unit that outputs information related to the purchase timing.

2. The information processing apparatus according to Claim 1, further comprising:
a purchase history acquisition unit that acquires a purchase history of the member,
wherein the purchase estimation unit estimates the purchase timing of the member based on the usage information and the purchase history.

3. The information processing apparatus according to Claim 1 or 2, further comprising:
a usage amount specifying unit that specifies a usage amount of the member based on the usage information; and
a replacement estimation unit that estimates a replacement timing of the member based on the usage amount, wherein
the purchase estimation unit estimates the purchase timing of the member based on the usage information and a history of the replacement timing, and
the output unit outputs information related to the purchase timing and information related to the replacement timing.

4. The information processing apparatus according to Claim 3, further comprising:
a replacement determination unit that determines whether or not the member is replaced based on the usage information, wherein
the replacement estimation unit estimates the replacement timing based on the usage amount at a timing when it is determined that the member has been replaced.

5. The information processing apparatus according to Claim 3, further comprising:
an opportunity usage amount specifying unit that estimates the usage amount for each suction opportunity based on the usage history,
wherein the purchase estimation unit estimates the purchase timing based on the specified usage amount and the usage amount for each suction opportunity.

6. The information processing apparatus according to any one of Claims 3 to 5, further comprising:
a frequency estimation unit that estimates a usage frequency of the aerosol generation device based on the replacement timing,
wherein the output unit outputs the information related to the usage frequency.

7. The information processing apparatus according to any one of Claims 1 to 6, wherein
the usage information acquisition unit acquires the usage information from a communication device associated with the aerosol generation device, and
the output unit transmits information related to the purchase timing to the communication device.

8. An information processing method comprising:
a step of acquiring usage information of an aerosol generation device to which a replaceable member consumed with use is attachable;
a step of estimating a purchase timing of the member purchased in plurality based on the acquired usage information; and
a step of outputting information related to the purchase timing.

9. A program causing a computer to execute:
a step of acquiring usage information of an aerosol generation device to which a replaceable member consumed with use is attachable;
a step of estimating a purchase timing of the member purchased in plurality based on the acquired usage information; and
a step of outputting information related to the purchase timing.
